# EUROPÄISCHE PATENTSCHRIFT

(11) **EP 1 059 208 B1**
(45) Veröffentlichungstag und Bekanntmachung des Hinweises auf die Patenterteilung: **18.02.2004**
(21) Anmeldenummer: 00109950.6
(22) Anmeldetag: 11.05.2000
(51) Int. Cl.: B60R 21/09, B60T 7/06

(54) **Pedalanordnung für Fahrzeuge**
Pedal arrangement for vehicles
Agencement de pédale pour véhicules

(30) Priorität: 11.06.1999 DE 19926604
(43) Veröffentlichungstag der Anmeldung: 13.12.2000
(73) Patentinhaber: DaimlerChrysler AG, 70567 Stuttgart (DE)
(72) Erfinder: Müller, Martin, 71292 Friolzheim (DE); Wolpert, Engelberg, 70176 Stuttgart (DE)

(56) Entgegenhaltungen:
- WO-A-97/30876
- DE-A- 19 515 852
- DE-A- 19 733 512
- DE-C- 19 617 372

## Beschreibung

Die Erfindung betrifft eine Pedalanordnung im Fußraum eines Kraftfahrzeuges mit den im Oberbegriff des Anspruches 1 erläuterten Merkmalen.

Es ist bekannt, die Pedalanordnung im Fußraum von Kraftfahrzeugen so zu treffen, dass im Falle einer Frontalaufprallbelastung zumindest das mit einer Bremsaktivierungseinheit gekoppelte Bremspedal von dieser abgekoppelt wird, um eine schädliche Pedalbewegung in den Fußraum hinein zu vermeiden (vgl. z.B. DE 35 33 420 C2; DE 19 51 58 52 A1; DE 19 61 73 72 C1).

Aus DE 28 41 988 C2 ist dabei auch eine Pedalanordnung bekannt, bei der, analog zu der im Oberbegriff des Anspruches 1 beschriebenen Konstruktion, der einen Pedalhebel hängend schwenkbeweglich lagernde Lagebock im Crashfall von einer oberen Befestigungsstelle im Motorraum abgerissen werden und um eine untere Befestigungsstelle derart verschwenken kann, dass dadurch das Pedal in Richtung auf die Stirnwand des Fahrzeuginnenraumes verlagert wird.

Diese Konstruktion erfordert die Anordnung des Pedallagerbockes innerhalb des Motorraumes und in einem solchen Abstand vor der denselben vom Fahrzeuginnenraum trennenden Stirnwand, dass bei einem entsprechenden Unfallgeschehen genügend Ausweichraum zu dessen Schwenkverlagerung zur Verfügung steht.

Demgemäß erfordert diese konstruktive Lösung einen realtiv großen Totraum durch einen entsprechend ins Fahrzeuginnere gerichteten, oberen Stirnwandteil, wobei der Pedalhebel durch die Stirnwand, entsprechend verlagerungsfähig und abgedichtet, hindurchzuführen ist.

Aufgabe der Erfindung ist es, eine Pedalanordnung der im Oberbegriff des Anspruches 1 erläuterten Art anzugeben, die im Motorraum keinen Montageplatz erfordert, die gute Zugänglichkeit zur Pedallagerung bietet und die im Falle einer Stirnwandintrusion sicherstellt, dass das Pedal Beine und/oder Füße des Fahrers nicht gefährden kann.

Diese Aufgabe wird erfindungsgemäß durch die kennzeichnenden Merkmale des Anspruches 1 gelöst.

Erfindungsgemäß ist der Lagerbock, wie an sich bekannt, auf der Seite des Fahrzeuginnenraumes an die Stirnwand angebaut, wobei die Lagerung des Pedals an einem oberen Lagerbock-Teilstück sowie dessen Ausstattung mit einem sich entgegengesetzt zur Stirnwand erstreckenden und im Falle einer durch Stirnwandintrusion bewirkten Verlagerung des Lagerbockes in den Fußraum hinein auf ein stationäres Widerlager auftreffenden Abreißorgan folgendes bewirkt:

Üblicherweise fällt bei einer unfallbedingten Stirnwandrückverschiebung deren Deformation im bodennahen Wandbereich größer aus als im oberen Wandbereich. Deshalb wird bei einer solchen Verformung ein an der Stirnwand innenseitig montierter Lagerkörper normalerweise eine Drehung um eine Fahrzeugquerachse nach oben ausführen, wodurch das Pedal in den Fußraum verschwenkt und dadurch die Verletzungsgefahr des Fahrers beträchtlich erhöht wird.

Eine solche Drehbewegung des Lagerkörpers wird durch das Zusammenwirken des erfindungsgemäß vorgesehenen Abreißorgans mit dem Widerlager verhindert, indem das Zusammenwirken dieser Teile den Lagerbock einer Bruchbelastung aussetzt, durch die das die Pedalschwenkachse tragende Teilstück des Lagerbockes von dessen übrigem Teil wegbricht. Bei diesem Gewaltbruch wird somit die Pedelhebellagerstelle aus dem Lagerbock herausgerissen, wobei der mindestens eine Pedalhebel lose nach unten fällt.

Eine bevorzugte Ausgestaltung der Erfindung ist dadurch gekennzeichent, dass das Abreißorgan ein doppelarmiger Hebel ist, dessen einer Hebelarm an einem ersten Anschlag des beim Abreißen an der Stirnwand verbleibenden Lagerbockteils anlegbar ist, der zur Hebelschwenkachse tieferliegend vorgesehen ist und dass das Widerlager im Crashfall auf die dem Hebelende zu nach unten abfallend gekrümmte Oberseite des anderen Hebelarmes des doppelarmigen Hebels kurvenartig aufläuft. Durch die Ausbildung des Abreißorganes als Doppelhebel in Verbindung mit dem diesem bockseitig zugeordneten, ersten Anschlag kommt der Bruch durch ein am Lagerbock angreifendes Drehmoment zustande.

Der Lagerbock kann bspw. so ausgelegt sein, dass der Bruch entlang einer definierten Bruchstrecke erfolgen wird. Hierzu kann der Lagerbock z.B. entsprechende Materialschwächungen aufweisen.

Die miteinander zusammenwirkenden, gekrümmten Oberflächen von doppelarmigem Hebel und Widerlager stellen dabei sicher, dass auch bei rein translatorischer Rückverlagerung des Lagerbockes dem doppelarmigen Hebel stets eine nach unten gerichtete Drehbewegung aufgeprägt wird.

Eine besonders geeignete Konstruktion dadurch gekennzeichnet, dass am Lagerbock der Bruchzone und oberhalb des ersten Anschlages ein zweiter Anschlag vorgesehen und der auf den Lagerbock einwirkende Hebelarm derart ausgebildet ist, dass bei Verschwenken des doppelarmigen Hebels durch diesen Hebelarm zunächst der zweite Anschlag zur Bildung einer Sollbruchstelle vom Lagerbock abreißbar ist. In diesem Falle wird bei einem Frontalaufprall durch den doppelarmigen Hebel in Zusammenwirken mit dem zweiten Anschlag am Lagerbock zunächst eine Sollbruchstelle erzeugt. Dies bietet den Vorteil, den Lagerbock konstruktiv so auszulegen, dass sich der eigentliche Bruch unter günstigen Biege- und Druckbelastungen des hebelförmigen Abreißorgans erzielen läßt.

Die Anordnung des doppelarmigen Hebels auf der Pedalschwenkachse bietet den Vorteil, für diesen auf die Anordnung spezieller Lagerungsmittel am Lagerbock verzichten zu können.

Weitere, vorteilhafte Ausgestaltungen der Erfindung sind dadurch gekennzeichnet, dass der doppelarmige Hebel im Querschnitt umgekehrt U-förmig ist und einen stegartigen, oberen Sattel des Lagerbockes übergreift und dass die beiden Anschläge je U-Schenkel des diesen zugeordneten Hebelarmes des doppelarmigen Hebels jeweils eine vom Lagerbock seitlich abragende Anschlagnase aufweisen. Außerdem ist vorgesehn, dass zumindest eine der Anschlagnasen des ersten Anschlages zugleich ein Widerlager zur Fixierung des Pedals in seiner ungetretenen Bereitschaftsposition bildet. Bei einer Weiterbildung ist vorgesehen, dass der den Anschlägen zugeordnete Hebelarm des doppelarmigen Hebels mit seinen U-Schenkelndie Anschlagnasen des zweiten Anschlages jeweils mit einem vorderen Ansatzstück untergreifen und mit diesen in Eingriff bringbar sind. Erfindungsgemäß weist die Pedalanordnung ein Federelement auf, das versucht, den doppelarmigen Hebel bzw. die vorderen Ansatzstücke seines Hebelarmes ständig mit den Anschlagnasen des zweiten Anschlages in Eingriff zu halten, während die Anschlagnasen des ersten Anschlages mit dem U-Schenkeln berührungslos sind.

In der Zeichnung ist ein Ausführungsbeispiel der Erfindung dargestellt. Es zeigen:
- Figur 1: eine Seitenansicht einer Pedalanordnung, in Einbaulage in einem Kraftfahrzeug;

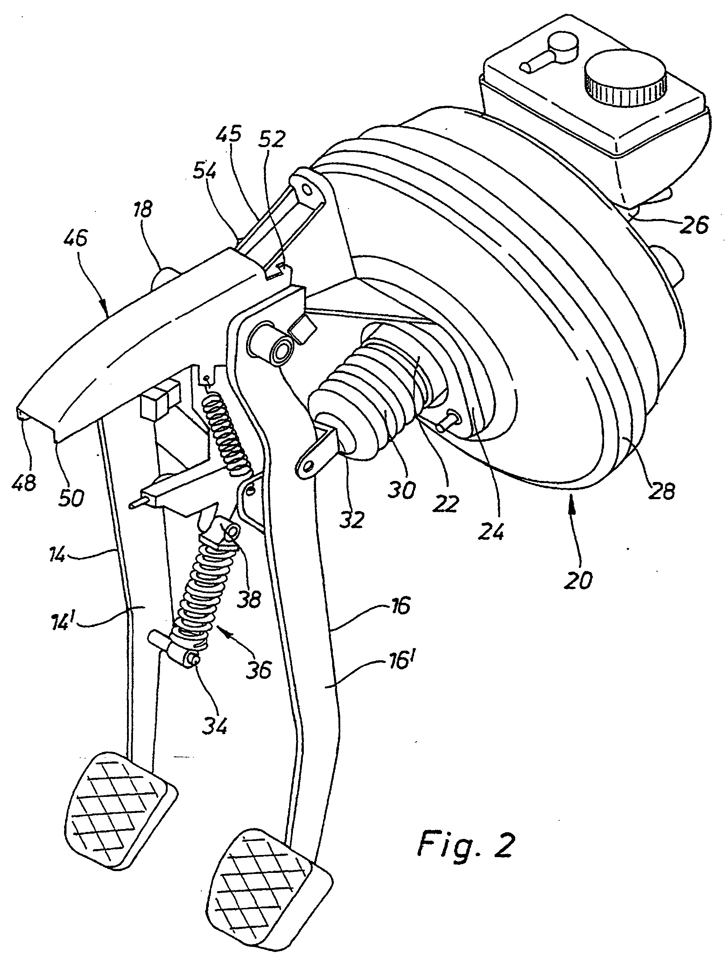

- Figur 2: einen perspektivische Darstellung der Pedalanordnung in Verbindung mit einem Bremsgerät, schräg von oben betrachtet;

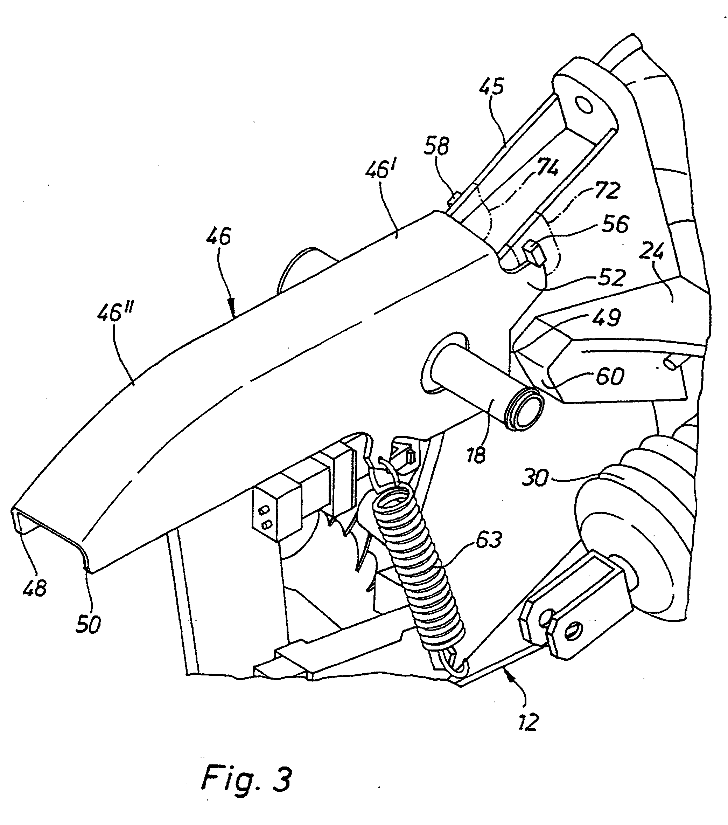

- Figur 3: einen Ausschnitt der Pedalanordnung gemäß Figur 2 in vergrößertem Maßstab, wobei ein Pedal entfernt ist.

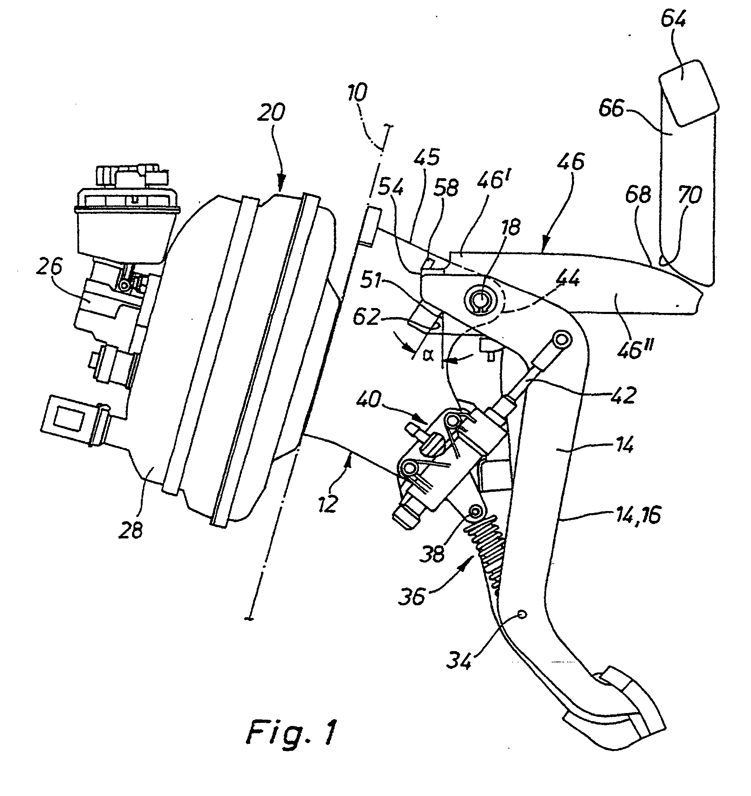

In Figur 1 ist strichpunktiert ein den Motorraum vom Fahrzeuginnenraum eines Kraftfahrzeuges trennende Stirnwand mit 10 bezeichnet. 12 bezeichnet als Ganzes einen an der Stirnwand 10 angeschraubten Lagerbock für beispielsweise ein Bremspedal 14 und ein Kupplungspedal 16, die beide auf einer gemeinsamen, horizontalen und zur Stirnwand 10 parallelen Schwenkachse 18 hängend schwenkbeweglich gelagert sind.

Mit 20 ist als Ganzes eine auf der Seite des Motorraums an der Stirnwand 10 vorgesehenes Bremsgerät bezeichnet, das mit einem Führungsstutzen 22 die Stirnwand 10 sowie eine am Lagerbock 12 seitlich angeformte Aufnahmeplatte 24 durchsetzt, wobei ein einen Hauptbremszylinder 26 tragender Bremsverstärker 28 des Bremsgerätes 20 an dieser Aufnahmeplatte 24 festgelegt ist.

Im Führungsstutzen 22 ist eine von einer Dichtmanschette 30 umschlossene Druckstange 32 des Bremsverstärkers 28 verschiebbar geführt, das am Pedalhebel 16' des Bremspedals 16 angelenkt ist.

Der Pedalhebel 14' des Kupplungspedals 14 trägt in bekannter Weise im unteren Bereich einen Achsstummel 34, auf dem ein längenveränderliches, federbeaufschlagtes Hebelrückstellelement 36 gelagert ist, das mit einem oberen Lagerauge auf einem Achsstummel 38 des Lagerbockes 12 aufgenommen ist.

Mittels des Kupplungspedals 14 ist, in gleichfalls bekannter Weise, ein am Lagerbock 12 festgelegter Kupplungszylinder 40 über eine Kolbenstange 42 ansteuerbar.

Die Pedalschwenkachse 18 durchsetzt ein Aufnahmeauge 44 des Lagerbockes 12, das an diesem, wie Figur 1 zeigt, am oberen, von der Stirnwand 10 abgekehrten Bockende, von diesem nach hinten abragend, angeformt ist. Dabei bildet dieses Aufnahmeauge 44 zugleich das Hinterende eines oberen Lagerbocksattels 45. Auf beiden Seiten des Aufnahmeauges 44 ist jeweils eines der Pedale 14, 16 auf der Schwenkachse 18 gelagert.

Mit 46 ist als Ganzes ein, ein Abreißorgan bildender doppelarmiger Hebel bezeichnet, der vorzugsweise auf der Schwenkachse 18 sitzt und sich entgegengesetzt zur Stirnwand im wesentlichen horizontal vom Lagerbock 12 wegerstreckt.

Der Hebel 46 ist vorzugsweise im Querschnitt umgekehrt U-förmig ausgebildet und übergreift teilweise das das Aufnahmeauge 44 aufweisende, hintere Endstück des Lagerbocksattels 45. Dessen der Stirnwand 10 zugekehrter Hebelarm 46' ist relativ kurz ausgelegt, wobei an den U-Schenkeln 48, 50 des Hebels 46, und zwar an ihrer der Stirnwand 10 zugekehrten Stirnkante 49 bzw. 51, jeweils ein Ansatzstück 52 bzw. 54 angeformt ist.

Die Ansatzstücke 52, 54 untergreifen jeweils eine seitlich am Lagerbocksattel 54 vorgesehene Anschlagnase 56 bzw. 58.

Desweiteren ist jeder Stirnkante 49 bzw. 51 der U-Schenkel 48, 50 des Hebelarms 46' am Lagerbock 12 seitlich und unterhalb der Schwenkachse 18 unter einem spitzen Winkel a (Figur 1) eine weitere Anschlagnase 60 bzw. 62 zugeordnet.

Mit 63 ist eine am Hebelarm 46" angreifende Zugfeder bezeichnet, die die Hebelansatzstücke 52 und 54 mit den Anschlagnasen 56, 58 in Eingriff hält.

Dem hinteren Hebelarm 46" des Hebels 46 ist im Fußraum des Kraftfahrzeuges ein von dessen Boden und von der Stirnwand 10 beabstandetes, vorzugsweise an einem Instrumententafel-Querträger 64 stationär angebrachtes Widerlager 66 zugeordnet, das sich oberhalb des Hinterendes des Hebelarmes 46" befindet und mit diesem im normalen Betriebszustand des Kraftfahrzeuges berührungslos ist.

Im Falle einer Intrusion der Stirnwand 10 bspw. infolge eines Frontalaufpralls geschieht nun folgendes:

Da üblicherweise die Stirnwandverformung im Fußbereich am ausgeprägtesten ist, wird dadurch der Lagerbock 12 samt Bremsgerät 20 gemäß Figur 1 im Gegenuhrzeigersinn gedreht. Dadurch wird der Hebelarm 46" des doppelarmigen Hebels 46 mit einer vorzugsweise kurvenartig nach hinten, unten gekrümmten Rückenfläche 68 an eine in adequater Weise gekrümmte Gegenfläche 70 des Widerlagers 66 angelegt, mit der Folge, dass an der Lagerstelle zwischen Lagerbock 12 und Hebel 46 eine Relativbewegung stattfindet. Diese führt dazu, dass der die Anschlagnasen 56, 58 untergreifende Hebelarm 46' gemäß Figur 1 eine Schwenkbewegung im Uhrzeigersinn ausführt und dessen Ansatzstücke 52, 54 dadurch die Anschlagnasen 56, 58 und diese umgebende Materialteile vom Lagerbocksattel 54 abreißen, so dass durch entstehende, strichpunktiert angedeutet Kerben 72, 74 eine erhebliche Sattelschwächung herbeigeführt wird.

Bei sich fortsetzender Relativdrehung, infolge weiterer Krafteinwirkung durch Stirnwandintrusion, kommen schließlich die Stirnkanten 49, 51 der U-Schenkel 48, 50 des Hebelarmes 46' mit den Anschlagnasen 60, 62 in Berührung, wobei das wirksame Drehmoment, begünstigt durch die zuvor erzeugten Kerben 72, 74, einen Gewaltbruch bewirkt, bei dem das die Schwenkachse 18 haltende Aufnahmeauge 44 vom Lagerbocksattel 45 abgerissen wird und dadurch die Pedale 14, 16 herabfallen bzw. lose an der Druckstange 32 des Bremsgeräts 20 und/oder am Kupplungsgeberzylinder hängen bleiben.

Die Anschlagnasen 60, 62 bilden vorzugsweise auch jeweils einen Anschlag für die Pedalhebel 14', 16', die verhindern, dass die Pedale 14, 16 über ihre ungetretene Position hinaus weiter nach hinten schwenken können.

Der Lagerbock 12 bildet vorzugsweise einen Formkörper aus Metallspritzguß, der sich für die Abreißfunktion des Hebels 46 durch entsprechend günstige Festigkeitswerte auszeichnet.

Selbstverständlich kann die Konstruktion auch derart abgewandelt sein, dass auch ohne vorheriges Kerben ein Gewaltbruch erzielt wird.

## Patentansprüche

1. Pedalanordnung im Fußraum eines Kraftfahrzeuges, mit wenigstens einem hängend angeordneten Pedalhebel (14 bzw. 16), der um eine Schwenkachse (18) schwenkbeweglich gelagert ist, die an einem Lagerbock (12) vorgesehen ist, der bei unfallbedingter Krafteinwirkung durch zumindest teilweises Abreißen relativ zur Stirnwand (10) des Fahrzeuginnenraumes derart verlagerbar ist, dass dies im Crashfall zu einer Verletzungen der unteren Extremitäten des Fahrers verhütenden Pedalverlagerung führt, **dadurch gekennzeichnet, dass** der Lagerbock (12) an der dem Fahrzeuginnenraum zugekehrten Seite der Stirnwand (10) angebaut ist, dass die Pedalschwenkachse (18) an einem oberen, vom Lagerbock (12) abreißbarem Bockteilstück (44) gelagert ist und dass vom abreißbarem Bockteilstück (44) entgegengesetzt zur Stirnwand (10) ein Abreißorgan (46) abragt, dem im Fußraum ein vom Boden und von der Stirnwand (10) beabstandetes Widerlager (66) zugeordnet ist, durch das im Falle einer crashbedingten Intrusion der Stirnwand (10) das Abreißorgan (46) beaufschlagbar und dadurch auf den Lagerbock (12) derart einwirkbar ist, dass das die Pedalschwenkachse (18) tragende Bockteilstück (44) vom Lagerbock (12) abreißt.

2. Pedalanordnung nach Anspruch 1, **dadurch gekennzeichnet, dass** das Abreißorgan ein doppelarmiger Hebel (46) ist, dessen einer Hebelarm (46') an einem ersten Anschlag (60, 62) des beim Abreißen an der Stirnwand (10) verbleibenden Lagerbockteils anlegbar ist, der zur Hebelschwenkachse (18) tieferliegend vorgesehen ist und dass das Widerlager (66) im Crashfall auf die dem Hebelende zu nach unten abfallend gekrümmte Oberseite des anderen Hebelarmes (46'') des doppelarmigen Hebels (46) kurvenartig aufläuft.

3. Pedalanordnung nach Anspruch 1, **dadurch gekennzeichnet, dass** am Lagerbock (12) in der Bruchzone und oberhalb des ersten Anschlages (60, 62) ein zweiter Anschlag (56, 58) vorgesehen und der auf den Lagerbock (12) einwirkende Hebelarm (46') derart ausgebildet ist, dass bei Verschwenken des doppelarmigen Hebels (46) durch diesen Hebelarm (46') zunächst der zweite Anschlag (56, 58) zur Bildung einer Sollbruchstelle (72, 74) vom Lagerbock (12) abreißbar ist.

4. Pedalanordnung nach Anspruch 2 oder 3, **dadurch gekennzeichnet, dass** der doppelarmige Hebel (46) auf der Pedalschwenkachse (18) gelagert ist.

5. Pedalanordnung nach Anspruch 2 oder 3, **dadurch gekennzeichnet, dass** der doppelarmige Hebel (46) im Querschnitt umgekehrt U-förmig ist und einen stegartigen, oberen Sattel (45) des Lagerbockes (12) übergreift und dass die beiden Anschläge je U-Schenkel (48, 50) des diesen zugeordneten Hebelarmes (46') des doppelarmigen Hebels (46) jeweils eine vom Lagerbock (12) seitlich abragende Anschlagnase (56, 58; 60, 62) aufweisen.

6. Pedalanordnung nach Anspruch 5, **dadurch gekennzeichnet, dass** zumindest eine der Anschlagnasen (60, 62) des ersten Anschlages zugleich ein Widerlager zur Fixierung des Pedals (14, 16) in seiner ungetretenen Bereitschaftsposition bildet.

7. Pedalanordnung nach Anspruch 3, **dadurch gekennzeichnet, dass** der den Anschlägen (56, 58; 60, 62) zugeordnete Hebelarm (46') des doppelarmigen Hebels (46) mit seinen U-Schenkeln (48, 50) die Anschlagnasen (56, 58) des zweiten Anschlages jeweils mit einem vorderen Ansatzstück (52 bzw. 54) untergreifen und mit diesen in Eingriff bringbar sind.

8. Pedalanordnung nach Anspruch 7, **gekennzeichnet durch** ein Federelement (63), das versucht, den doppelarmigen Hebel (46) bzw. die vorderen Ansatzstücke (52, 54) seines Hebelarmes (46') ständig mit den Anschlagnasen (56, 58) des zweiten Anschlages in Eingriff zu halten, während die Anschlagnasen (60, 62) des ersten Anschlages mit dem U-Schenkeln (48, 50) berührungslos sind.

## Claims

1. Pedal arrangement in the footwell of a vehicle, with at least one suspended pedal (14 or 16), that is supported such that it can swivel around the pivoting axis (18), that is provided on a bearing block (12) that, in the case of the effects of forces as caused by an accident, can be displaced by at least partial detachment relative to the front side (10) of the vehicle interior such that, in the event of a crash, there is a displacement of the pedal that prevents the lower extremities from being injured, **characterized in that** the bearing block 12) is attached to the side of the front (10) that faces the interior of the vehicle, the pivoting axis (18) of the pedal is supported on an upper block section (44) that can come off of the bearing block (12) and a detachment element (46) projects from the detaching block section (44) in the direction opposite to the front side (10), this detachment element (46) being associated with an abutment (66), in the footwell, that is at a separation from the floor and from the front side (10), by means of which the detachment element (46) can have force applied to it, in the event of impact-intrusion through the front side (10) because of crashing, and is thereby able to act on the bearing block (12) such that the block section (44) carrying the pedal pivoting axis (44) comes away from the bearing block (12).

2. Pedal arrangement in accordance with claim 1, **characterized in that** the detachment element is a two-armed lever (46), one arm (46') of which can lie on a first stop (60, 62) remaining on the front wall (10) at the time of detachment and lying deeper in relation to the axis of pivoting of the pedal (18), and **in that** the abutment (66) runs, over a curved course, onto the downward, arched upper side of the lever end of the other lever arm (46") of the two-armed lever (46), in the case of crashing.

3. Pedal arrangement in accordance with claim 1, **characterized in that** a second stop (60, 62) is provided in the breaking zone and above the first stop (56, 58) on the bearing block (12) and is developed on the lever arm (46') acting on the bearing block such that, when the two-armed lever (46) swivels by means of this lever arm (46'), the second stop (56, 58) can first of all come off of the bearing block (12), forming a breaking point.

4. Pedal arrangement in accordance with claims 2 or 3, **characterized in that** the two-armed lever (46) is supported on the pivoting axis (18) of the pedal.

5. Pedal arrangement in accordance with claim 2 or 3, **characterized in that** the two-armed lever (46) is U-shaped in cross-section and extends over a web-type upper saddle-piece (45) of the bearing block (12) and **in that** the two stops each have a stop dog (56, 58; 60, 62), projecting laterally from the bearing block (12), per U-form arm (48, 50) of the lever arm (46'), of the two-armed lever (46), that is associated with the U-arms.

6. Pedal arrangement in accordance with claim 5, **characterized in that** at least one of the stop dogs (60, 62) of the first stop also forms an abutment for fixing the pedal (14, 16) in its un-actuated position of readiness.

7. Pedal arrangement in accordance with claim 3, **characterized in that** the lever arm (46'), of the two-armed lever (46), associated with the stops (56, 58; 60, 62), can, with its U-arms (48, 50), in each case provide a reverse grasp with a front connecting piece (52 or 54) and be brought into engagement with the stop dogs (56, 58) of the second stop with this (52 or 54).

8. Pedal arrangement in accordance with claim 7, **characterized by** a spring element (63) which tends to constantly keep the two-armed lever (46) and the front connecting piece (52, 54) of its lever arm (46') engaged with the stop dogs (65, 58) of the second stop, while the stop dogs (60, 62) of the first stop cannot come into contact with the U-arms (48, 50).

## Revendications

1. Pédalier, installé dans l'espace des pieds d'un véhicule automobile, comportant au moins un levier de pédale (14, respectivement 16), disposé de façon suspendue, monté à pivotement autour d'un axe de pivotement (18), prévu sur un bloc de palier (12), déplaçable sous l'effet d'une force provenant d'un accident, par un déchirement au moins partiel par rapport à la paroi frontale (10) de l'habitacle du véhicule, de manière que, en cas de collision, ceci mène à un déplacement des pédales, ayant comme effet de protéger contre les blessures des extrémités inférieures du conducteur, **caractérisé en ce que** le bloc palier (12) est monté sur la face, tournée vers l'habitacle, de la paroi frontale (10) de manière que l'axe de pivotement de pédales (18) soit monté sur une pièce de partie de bloc supérieure (44), pouvant être arrachée du bloc de palier (12), et qu'un organe arrachable (46) fasse saillie de la pièce de partie de bloc (44) déchirable, à l'opposé de la paroi frontale (10), organe déchirable auquel est associé, dans l'espace des pieds, un contre-palier (66) espacé du plancher et de la paroi frontale (10), au moyen duquel, en cas d'intrusion de la paroi frontale (10), du fait d'une collision, l'organe déchirable (46) est susceptible d'être sollicité et, de ce fait, de pouvoir agir sur le bloc de palier (12), de manière que l'élément de partie de bloc (44), portant l'axe de pivotement de pédales (18), s'arrache du bloc palier (12).

2. Pédalier selon la revendication 1, **caractérisé en ce que** l'organe déchirable est un levier (46) à deux bras, dont un premier bras de levier (46') est susceptible d'être appliqué sur une première butée (60, 62) de la partie de bloc de palier restant sur la paroi frontale (10) en cas d'arrachement, partie de bloc de palier prévue de manière à être située plus profondément par rapport à l'axe de pivotement de levier (18), et **en ce que**, en cas de collision, le contre-palier (66) monte, à la façon d'une came, sur la face supérieure, descendant vers le bas en allant en direction de l'extrémité de levier, appartenant à l'autre bras de levier (46") du levier (46) à deux bras.

3. Pédalier selon la revendication 1, **caractérisé en ce que**, sur le bloc palier (12), dans la zone de rupture et au-dessus de la première butée (60, 62), est prévue une deuxième butée (56, 68), et le bras de levier (46') agissant sur le bloc palier (12) est réalisé de manière que, en cas de pivotement du levier (46) à deux bras, du fait de son bras de levier (46'), la deuxième butée (56, 58) va d'abord être susceptible d'être arrachée du bloc palier (12) pour former un point destiné à la rupture (72, 74).

4. Pédalier selon la revendication 2 ou 3, **caractérisé en ce que** le levier (46) à bras double est monté sur l'axe de pivotement de pédales (18).

5. Pédalier selon la revendication 2 ou 3, **caractérisé en ce que** le levier à bras double (46) a une section transversale en forme de U inversé et entoure une selle (45) supérieure du genre d'une nervure du bloc palier (12), et **en ce que** les deux butées de chacune des branches de U (48, 50) du bras de levier (46'), associé à celles-ci, du levier (46) à deux bras, présentent chacune un ergot de butée (56, 58 ; 60, 62) faisant saillie latéralement du bloc palier (12).

6. Pédalier selon la revendication 5, **caractérisé en ce qu'**au moins l'un des ergots de butée (60, 62) de la première butée forme en même temps un contre-appui pour la fixation de la pédale (14, 16) à sa position prête, non sollicitée par le pied.

7. Pédalier selon la revendication 3, **caractérisé en ce que** le bras de levier (46'), associé aux butées (56, 58 ; 60, 62), du levier (46) à deux bras, avec ses branches de U (48, 50), saisit par le dessous les ergots de butée (56, 58) de la deuxième butée, chaque fois par un élément en forme d'appendice avant (52 ou 54), et est susceptible d'être mis en prise avec ceux-ci.

8. Pédalier selon la revendication 7, **caractérisé par** un élément élastique (63), qui tente de maintenir en prise en permanence le levier à deux bras (46) ou les éléments en forme d'appendice avant (52, 54) de son bras de levier (46') avec les ergots de butée (56, 58) de la deuxième butée, tandis que les ergots de butée (60, 62) de la première butée n'ont aucun contact avec les branches de U (48, 50).
